# EUROPÄISCHE PATENTSCHRIFT

(11) **EP 3 633 451 B1**
(45) Veröffentlichungstag und Bekanntmachung des Hinweises auf die Patenterteilung: **15.12.2021**
(21) Anmeldenummer: 19204824.7
(22) Anmeldetag: 12.01.2015
(51) Int. Cl.: G03B 17/17, G03B 17/48, G03B 17/56, F41G 1/38, F41G 1/46, F41G 11/00, F41G 3/26

(54) **KAMERAEINRICHTUNG ZUR BEFESTIGUNG AN INSBESONDERE EINER OPTISCHEN ZIELEINRICHTUNG**
CAMERA DEVICE FOR FASTENING TO AN ESPECIALLY OPTICAL SIGHTING DEVICE
SYSTÈME DE CAMÉRA À FIXER NOTAMMENT SUR UN ÉQUIPEMENT DE VISÉE OPTIQUE

(30) Priorität: 10.01.2014 TR 201400305; 07.02.2014 DE 202014100544 U
(43) Veröffentlichungstag der Anmeldung: 08.04.2020
(62) Teilanmeldung aus: 15702143.7
(73) Patentinhaber: Kilic, Michael Ali, 97525 Schwebheim (DE)
(72) Erfinder: Kilic, Michael Ali, 97525 Schwebheim (DE)
(74) Vertreter: advotec.

(56) Entgegenhaltungen:
- EP-A1- 2 003 482
- WO-A1-99/27318
- CN-U- 87 207 514
- GB-A- 846 917
- US-A- 4 930 883
- US-A- 5 020 262
- US-A1- 2002 002 788
- US-A1- 2005 213 959
- US-A1- 2013 251 358

## Beschreibung

Die Erfindung betrifft eine Kameraeinrichtung zur Befestigung am Okulartubus einer optischen Einrichtung, insbesondere eines Zielfernrohrs, eines Fernrohrs oder eines Teleskops, nach dem Oberbegriff des Anspruchs 1.

Kameraeinrichtungen der eingangs genannten Art dienen vorzugsweise, jedoch keineswegs ausschließlich, zur Dokumentation, Beweissicherung und Überwachung. So können beispielsweise im jagdlichen Bereich die Situationen während und nach einem Schuss aufgezeichnet und als Bild oder Video zur Erinnerung verwendet werden. Insbesondere im militärischen und polizeilichen Bereich sowie bei Sicherheitskräften kann eine derartige Dokumentation von Schiesssituationen von erheblicher Bedeutung beispielsweise zur Beweissicherung sein. Auch zur Schützenausbildung können derartige Systeme Verwendung finden, sei es durch nachträgliche Kontrolle der aufgenommenen Bilder oder aber durch Übertragung der aufgenommenen Bilder in Echtzeit an einen Ausbilder.

Aus dem Stand der Technik sind gattungsgemäße Kameraeinrichtungen bekannt, bei denen eine Bilderfassung außerhalb eines Zielfernrohrs parallel zu dessen optischer Achse erfolgt. Dabei zeigt die Einrichtung zur Bilderfassung jedoch ein parallaxeverschobenes Bild, dessen Genauigkeit, insbesondere wenn auf unterschiedliche Entfernungen geschossen wird, dann regelmäßig ungenügend ist. Insbesondere wenn die Einrichtung zur Bilderfassung an einem Zielfernrohr befestigt ist, wird zudem die Zielerfassung durch Einschränkung der Sicht des Schützen behindert. Ein weiterer Nachteil bekannter Bilderfassungssysteme ist, dass die Anordnung an einer Waffe bzw. einem Zielfernrohr komplex ist und eine aufwändige Justierung erfordert. Erfolgt nach dem Abnehmen der Einrichtung eine erneute Montage, wird eine abermalige Justierung erforderlich.

Aus der US 2002/002788 A1 ist eine gattungsgemäße Kameraeinrichtung mit Montagemodul, Kameramodul und Umlenkmodul bekannt.

Ausgehend von diesem Stand der Technik ist es die Aufgabe der vorliegenden Erfindung, eine Kameraeinrichtung zur Befestigung am Okulartubus einer optischen Einrichtung, insbesondere eines Zielfernrohrs, eines Fernrohrs oder eines Teleskops, zu schaffen, die die Zielerfassung des Schützen nicht beeinträchtigt und eine hohe Genauigkeit aufweist.

Diese Aufgabe wird durch eine Kameraeinrichtung nach der Lehre des Anspruchs 1 gelöst.

Vorteilhafte Ausgestaltungen der Erfindung sind Gegenstand der Unteransprüche.

Die Kameraeinrichtung ist gattungsgemäß zur Befestigung am Okulartubus einer optischen Einrichtung vorgesehen. Diese kann insbesondere ein Zielfernrohrs, ein Fernrohr oder ein Teleskop sein. Wenn nachfolgend die Erfindung anhand des Beispiels eines Zielfernrohrs erläutert wird, soll dies keine Einschränkung auf diese Art einer optischen Einrichtung bedeuten.

Gattungsgemäß weist die Kameraeinrichtung ein Montagemodul, ein Umlenkmodul und ein Kameramodul auf. Das Montagemodul dient dabei zunächst im wesentlichen zur Befestigung der Kameraeinrichtung am Okulartubus. Das Umlenkmodul ist mit einer in einem Gehäuse angeordneten Einrichtung zur Umlenkung des Bildes aus der Achse der optischen Einrichtung versehen; wobei die Einrichtung zur Umlenkung halbdurchlässig so ausgebildet und angeordnet ist, dass bei auf die optische Einrichtung aufgesetzter Kameraeinrichtung der Durchblick durch die optische Einrichtung ermöglicht ist. Ferner ist gattungsgemäß ein Kameramodul zur Aufnahme und/oder Weiterleitung des Bildes vorgesehen. Das Montagemodul, das Umlenkmodul und/oder das Kameramodul sind gattungsgemäß lösbar miteinander verbunden.

Diese Gestaltung bedeutet, dass bei auf den Okulartubus eines Zielfernrohrs aufgesetzter Kameraeinrichtung das Zielfernrohr aufgrund der Halbdurchlässigkeit der Einrichtung zur Bildablenkung zum Einen uneingeschränkt weiter verwendbar ist und zum Anderen das im Kameramodul aufgenommene Bild exakt dem Bild entspricht, das der Schütze im Okular des Zielfernrohrs sieht. Weiter kann aufgrund der Lösbarkeit der Module das Montagemodul am Zielfernrohr verbleiben, während das Umlenk- und das Kameramodul abgenommen werden können. In umgekehrter Weise lassen sich Umlenk- und Kameramodul erneut ohne wesentliche Einschränkungen der Genauigkeit am Montagemodul befestigen, wodurch sich eine hohe Wiederholgenauigkeit der optischen Montage ergibt.

Erfindungsgemäß weist das Montagemodul einen doppelschaligen Aufbau mit zwei Montageschalen auf. Erfindngsgemäß ist der Befestigungsring einstückig an eine erste der beiden Montageschalen angeformt.Erfindngsgemäß endet die zweite Montageschale in einem Abstand vom Befestigungsring. Dadurch wird im Montagemodul ein Fenster ausgebildet, durch das sich auch bei aufgesetztem Montagemodul beispielsweise eine gegebenenfalls am Okulartubus vorhandene Dioptrieneinstellung betätigen lässt, um eine Fehlsichtigkeit eines Schützen auszugleichen.

Gemäß einer bevorzugten Ausführungsform wird zwischen den beiden Montageschalen ein im wesentlichen der Außenkontur des Okulartubus entsprechender in der Regel mehr oder weniger zylindrischer Raum gebildet. Dabei sind beide Montageschalen mittels einer Klemmeinrichtung den Okulartubus zumindest abschnittsweise kraft- und/oder formschlüssig umschließend gegeneinander klemmbar. Nach diesem Ausführungsbeispiel braucht der Okulartubus keinerlei Befestigungselemente wie zum Beispiel ein Außengewinde aufweisen, so dass das Montagemodul für eine Vielzahl von Zielfernrohren mit einem bestimmten Außendurchmesser oder Außendurchmesserbereich Verwendung finden kann. Weicht der Außendurchmesser des Okulartubus vom zugelassenen Durchmesserbereich ab, können bei kleineren Außendurchmessern beispielsweise Einlegstreifen oder Einlegschalen in den Montageschalen Verwendung finden, die den freien Klemmdurchmesser verringern. In der Regel wird jedoch eine Montageschale mit für ein bestimmtes Zielfernrohr angepasstem Klemmdurchmesser verwendet, so dass die Montageschale gleichzeitig die Funktion eines Adapters aufweist.

Zur Befestigung des Umlenkmoduls am Montagemoduls kann nach einer weiteren Ausführungsform das Montagemodul im Bereich seines zum Umlenkmodul weisenden Endes einen Befestigungsring mit einer Befestigungseinrichtung zur lösbaren Befestigung des Umlenkmoduls aufweisen. Dabei kann dieser Befestigungsring auf seiner zur optischen Einrichtung, also in der Regel zum Zielfernrohr weisenden Seite eine Anschlagfläche zur mittelbaren oder unmittelbaren Anlage des stirnseitigen Endes des Okulartubus aufweisen. Diese Anschlagfläche stellt dabei sicher, dass die gesamte Kameraeinrichtung in Achsrichtung des Zielfernrohrs definierter Position angeordnet werden kann.

Vorzugsweise kann dabei diese Anschlagfläche zumindest geringfügig konisch ausgebildet sein, das heißt einen Konus bilden, der sich in Richtung zum Zielfernrohr hin verjüngt. In Verbindung mit dem kragenseitigen Ende des Okulartubus, der dann auf dem Konus aufsitzt, ergibt sich eine selbsttätige Zentrierung des Montagemoduls and damit der gesamten Kameraeinheit auf dem Okulartubus bezüglich der optischen Achse des Zielfernrohrs. Dadurch lässt sich die Genauigkeit weiter erhöhen.

Nach einer weiteren Ausgestaltung der Erfindung kann zwischen dem stirnseitigen Ende des Okulartubus und der Anschlagfläche ein Zentrierring angeordnet sein, der zumindest auf seiner zum Okular weisenden Seite zumindest geringfügig konisch ausgebildet ist. Dabei kann auf eine konische Gestaltung der Anschlagfläche verzichtet werden. Es ist jedoch ebenfalls möglich, dass sowohl die Anschlagfläche, wie vorstehend erläutert, konisch ausgebildet ist und der Zentrierring doppelkonisch, das heißt auf beiden Seiten konisch, ist. Dadurch erfolgt sowohl eine Zentrierung des Zentrierrings im Montagemodul als auch eine Zentrierung des Montagemoduls bezüglich der optischen Achse des Zielfernrohrs.

Die Klemmung der beiden Montageschalen am Okulartubus kann wiederum auf grundsätzlich beliebige Weise erfolgen, beispielsweise mittels leicht betätigbaren Klemmhebeln oder dergleichen. Da jedoch das Montagemodul in der Regel am Okulartubus verbleibt, werden nach einem weiteren Ausführungsbeispiel Klemmschrauben verwendet. Dabei weist die Klemmeinrichtung mindestens eine Klemmschraube auf, die eine der beiden Montageschalen randseitig in einer Ausnehmung durchgreift und in ein ebenfalls randseitig in der anderen der beiden Montageschalen ausgebildetes Innengwinde eingreift. In der Regel werden zwei oder vier Klemmschrauben bezüglich der Anordnung der optischen Achse des Zielfernrohrs Verwendung finden, um zum Einen eine sichere Befestigung zu gewährleisten und zum Anderen einen Verzug des Okulartubus möglichst auszuschließen.

Die Befestigung des Umlenkmoduls am Montagemodul kann auf unterschiedliche Weise erfolgen. So ist es beispielsweise ohne den Boden der Erfindung zu verlassen möglich, den Befestigungsring mit einem Innengewinde zu versehen, in das ein mit einem entsprechenden Außengewinde versehener Flansch am Gehäuse des Umlenkmoduls einschraubbar ist. Wenngleich die Festigkeit einer solchen Verbindung durchaus ausreicht, hat diese doch den Nachteil, dass die Drehposition des Umlenkmoduls bzw. der Einheit aus Umlenkmodul und Kameramodul nicht vorbestimmbar ist. Nach einer besonders bevorzugten Ausgestaltung der Erfindung ist daher die Befestigungseinrichtung nach Art eines Bajonettverschlusses ausgebildet und weist mindestens zwei Verriegelungsausnehmungen auf, in die jeweils dazu form- und/oder funktionskomplementäre am Gehäuse des Umlenkmoduls angeordnete Verrieglungswarzen durch eine Steck-Dreh-Bewegung in lösbaren Eingriff bringbar sind. Dadurch lässt sich zum Einen die Verbindung zwischen dem am Okulartubus verbleibenden Montagemodul in einfacher Weise lösen und wiederherstellen und zum Andern befindet sich die Kameraeinrichtung nach dem Aufsetzen in genau definierter Position. Wenn beispielsweise für einen Rechtsschützen das Kameramodul in einer anderen Position sein soll wie für einen Linksschützen, lässt sich dies dadurch erreichen, dass die Klemmung der Montageschalen gelöst, die gesamte Einrichtung um beispielsweise 180 Grad verdreht und anschließend die Klemmung wieder angezogen wird.

Um insbesondere diese Umstellung noch einfacher zu gestalten sind nach einem besonders bevorzugten Ausführungsbeispiel mindestens vier Verriegelungsausnehmungen in der Befestigungseinrichtung vorgesehen. Dadurch ergibt sich bei entsprechender Anordnung von zwei oder ebenfalls vier oder mehr Verrieglungswarzen am Gehäuse des Umlenkmoduls eine Befestigungsmöglichkeit in unterschiedlichen festgelegten Drehpositionen. Sind beispielsweise vier Verriegelungsausnehmungen und vier Verriegelungswarzen in symmetrischer um 90 Grad versetzter Anordnung vorgesehen, ergeben sich vier vorbestimmte Positionen der erfindungsgemäßen Kameraeinrichtung.

Um ein unbeabsichtigtes Lösen des Umlenkmoduls bzw. der Einheit aus Umlenkmodul und Kameramodul vom Montagemodul und damit vom

Zielfernrohr zu verhindern, ist nach einem weiteren Ausführungsbeispiel eine Arretiervorrichtung am Befestigungsring vorgesehen. Vorzugsweise weist dabei die Arretiervorrichtung einen federgelagerten Sicherheitsriegel auf, der in einer Ausnehmung des Befestigungsrings verschieblich gelagert ist. Dabei ist der Sicherheitsriegel über ein Betätigungselement aus einer ersten Position, in der ein Verdrehen des Umlenkmoduls gegenüber dem Montagemodul blockiert ist, in eine zweite Position, in der das Umlenkmodul und das Montagemodul gegeneinander verdrehbar und damit lösbar sind, bringbar. Um eine leichte Betätigung des Sicherheitsriegels in unterschiedlichen Drehpositionen der Kameraeinrichtung sicher zu stellen, kann der Befestigungsring in Umfangsrichtung beabstandet mindestens zwei unterschiedlich angeordnete Ausnehmungen aufweisen, in der dann wahlweise der federkraftbeaufschlagte Sicherheitsriegel und das Betätigungselement montiert werden können. Vorzugsweise liegen dabei zwei Ausnehmungen einander bezüglich der Achse des Zielfernrohrs diametral gegenüber.

Nach einer besonders bevorzugten Ausgestaltung der Erfindung weist das Gehäuse des Umlenkmoduls eine erste Gehäuseöffnung, eine zweite Gehäuseöffnung und eine dritte Gehäuseöffnung auf. Dabei liegen die erste Gehäuseöffnung und die zweite Gehäuseöffnung in Richtung der optischen Achse des Zielfernrohrs hintereinander und die dritte Gehäuseöffnung ist dazu winklig, insbesondere im Wesentlichen rechtwinklig, angeordnet. Die Einrichtung zur Bildablenkung ist dabei so im Gehäuse angeordnet, dass das entlang der optischen Achse des Zielfernrohrs durch die erste Gehäuseöffnung eintretende Bild durch die halbdurchlässige Einrichtung zur Bildablenkung sowohl über die zweite Gehäuseöffnung an das Auge eines Schützen als auch durch die dritte Gehäuseöffnung an das Kameramodul aus dem Umlenkmodul weitergeleitet wird.

Welche Art einer Einrichtung zur Bildablenkung Verwendung findet ist grundsätzlich beliebig, solange zum Einen eine Umlenkung und zum Anderen die Halbdurchlässigkeit gewährleistet ist. Vorzugsweise weist die Einrichtung zur Bildablenkung einen halbdurchlässigen Spiegel oder eine halbdurchlässige Prismenanordnung auf. Die Prismenanordnung kann dabei aus Teilprismen bestehen, die miteinander veklebt verpresst oder durch Adhäsionskräfte verbunden sind.

Um das aus dem Okulartubus des Zielfernrohrs austretende Bild zur Aufnahme durch die Kamera entsprechend abzubilden, kann eine Linseneinrichtung nach Art eines Objektivs entweder im Umlenkgehäuse vor oder nach der Einrichtung zur Bildablenkung oder aber im Gehäuse des Kameramoduls vorgesehen sein.

Das Kameramodul selbst kann nach einer bevorzugten Ausgestaltung mindestens einen Bildsensor, insbesondere in Form eines CCD- oder CMOS-Chips, aufweisen, der im Gehäuse des Kameramoduls angeordnet ist. Weiter kann eine Einrichtung zur Verarbeitung, Speicherung und/oder Weiterleitung der Daten des Bildsensors im Kameramodul vorgesehen sein. Die Bilder können dabei als Einzelbilder oder Videos aufgezeichnet und gegebenenfalls bereits aus den Raw-Daten in JPEGs vorverarbeitet werden. Die Speicherung kann auf internen RAMs erfolgen, die anschließend ausgelesen werden können oder aber auf Wechselspeichern, insbesondere SD- oder micro-SD-Karten. Das Auslesen kann über genormte Schnittstellen, insbesondere USB, erfolgen. Ebenso ist eine drahtlose Übertragung über beispielsweise Bluetooth, WLAN oder eine GSM-Schnittstelle zeitversetzt oder in Echtzeit möglich.

Insbesondere zur Verwendung im Bereich von Sicherheitskräften kann im Kameramodul das drahtlose Übertragungsmodul, insbesondere das GSM-Modul, auch zur bidirektionalen Kommunikation mit beispielsweise einer Einsatzleitung verwendet werden. Dazu kann das Kameramodul einen Lautsprecher oder eine Schnittstelle zum Anschluss eines Kopf- oder Ohrhörers aufweisen.

Die Betätigung der Kameraeinrichtung kann über Betätigungselemente, wie z.B. Betätigungsknöpfe, erfolgen, über die insbesondere die Kamera ein- und ausgeschaltet und die Betriebsarten Video/Foto sowie stumm/Ton gewählt werden können. Nach einer Ausgestaltung kann die Kameraeinheit über eine Fernbedienung oder eine entsprechende Anwendung auf beispielsweise einem Smartphone gesteuert werden.

Weiter kann die Stromversorgung des Kameramoduls durch ein externes Netzteil oder durch interne Batterien oder wiederaufladbare Akkus erfolgen.

Weiter kann im Gehäuse des Kameramoduls eine Mikrofonanordnung vorgesehen sein, um neben dem Bild auch Tonsignale zu speichern und/oder zu übertragen.

Eine besonders kompakte Bauform des Kameramoduls ergibt sich, wenn nach einem weiteren Ausführungsbeispiel der Bildsensor, die Einrichtung zur Verarbeitung, die Einrichtung zur Speicherung und/oder die Einrichtung zur Weiterleitung der Daten des Bildsensors auf einer Platine angeordnet sind.

In grundsätzlich beliebiger Weise können die Montageschalen des Montagemoduls, das Gehäuse des Umlenkmoduls und/oder das Gehäuse des Kameramoduls aus einem Kunststoff bestehen. Vorzugsweise jedoch, insbesondere im Hinblick auf hohe sicherheitstechnische Anforderungen, bestehen diese Elemente aus Metall, insbesondere aus Aluminium oder einer, insbesondere hochfesten, Aluminiumlegierung.

Um insbesondere bei der Verwendung von Metallgehäusen eine Kurzschlussbildung zuverlässig zu verhindern, sind nach einem weiteren Ausführungsbeispiel der Erfindung der Bildsensor, die Einrichtungen zur Verarbeitung, Speicherung und/oder Weiterleitung der Daten des Bildsensors und/oder die Platine auf einem Kunststoffträger aus elektrisch nicht leitenden Material angeordnet.

Die Erfindung lässt sich insbesondere zu folgenden Zwecken verwenden:
- Aufzeichnung der Jagdszenen auf Video statt auf Fotos, die auf der Jagd nach der Erlegung als Erinnerung aufgenommen werden.
- Aufzeichnung der mit dem Zielfernrohr beobachteten Flora und Fauna.
- Gewährleistung, dass die verantwortlichen Leiter bei Operationen der Sicherheitseinheiten die Operationen zeitgleich verfolgen können, und Reduzierung der Fehlerquote.
- Aufzeichnung des Überwachungsmoments und Sammeln von Beweisen.
- Fehlerreduzierung und Zeitgewinn bei der Schützenausbildung, indem die Erfindung gewährleistet, dass die Ausbilder und Schüler die Schüsse zeitgleich sehen.

Im Folgenden wird die Erfindung anhand lediglich Ausführungsbeispiele zeigender Zeichnungen näher erläutert.

Es zeigen:
- **Fig. 1**: in Explosionsdarstellung das Montagemodul und das Umlenkmodul eines ersten Ausführungsbeispiels einer erfindungsgemäßen Kameraeinrichtung;

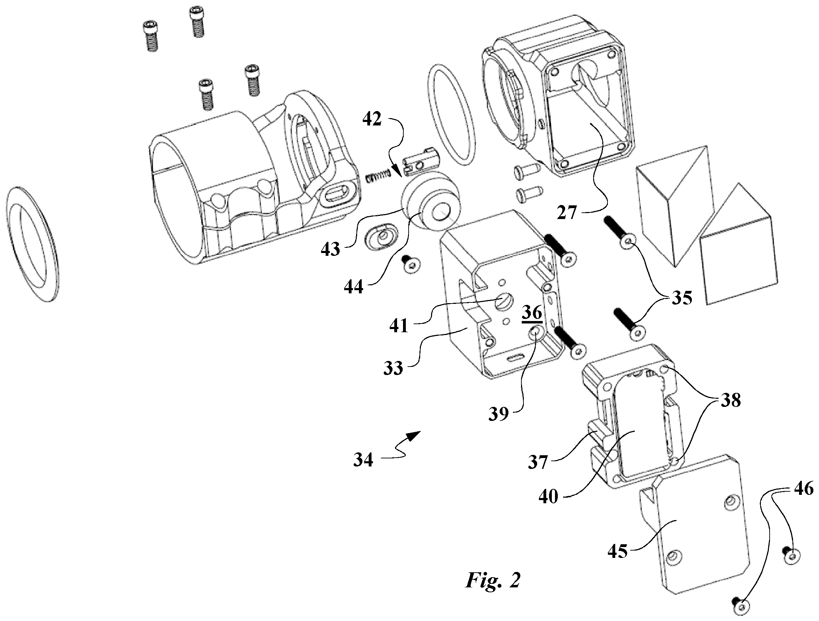

- **Fig. 2**: das Ausführungsbeispiel nach Fig. 1 mit Kameramodul ebenfalls in Explosionsdarstellung; und
- **Fig. 3**: in einer der Fig. 1 entsprechenden Darstellung ein zweites Ausführungsbeispiele einer nicht erfindungsgemäßen Kameraeinrichtung.

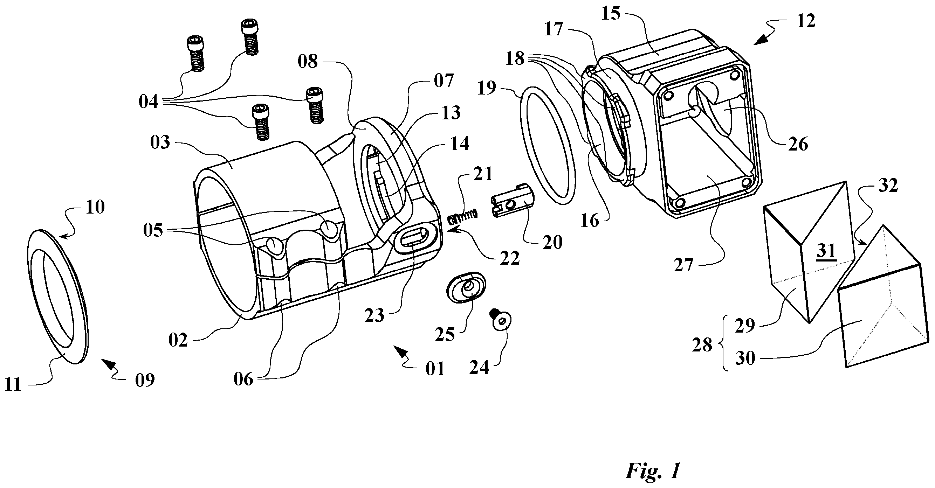

In Fig. 1 ist ein erstes Ausführungsbeispiel der Erfindung dargestellt. Die optische Einrichtung bzw. der Okulartubus des Zielfernrohrs, auf den das Montagemodul aufgesetzt wird, ist aus Gründen einer klareren Darstellung nicht gezeigt.

Das Montagemodul 01 weist eine erste Montageschale 02 und eine zweite Montageschale 03 auf. Die beiden Montageschalen 02 und 03 sind über eine Klemmeinrichtung miteinander verbunden, die vier Klemmschrauben 04 aufweist, die randseitig an der Montageschale 03 angeordnete Ausnehmungen 05 durchgreifen und in mit einem Innengwinde versehene Ausnehmungen 06 eingreifen.

Im Bereich seines vom Zielfernrohr wegweisenden Endes ist das Montagemodul 01 mit einem Befestigungsring 07 versehen. Der Befestigungsring 07 ist einstückig an der Montageschale 02 angeformt und weist an seiner zum Zielfernrohr weisenden Seite eine Anschlagfläche 08 auf. Ein Zentrierring 09 ist an seiner zur Anschlagfläche weisenden Seite mit einer planen Anschlagfläche 10 versehen. An seiner gegenüberliegenden Seite weist der Zentrierring eine konische Fläche 11 auf. Der Zentrierring wird in der in Fig. 1 dargestellten Position in das Montagemodul eingesetzt, bis er mit seiner Fläche 10 an der Anschlagfläche 08 des Befestigungsrings 07 zur Anlage gelangt.

Die Montageschale 03 weist eine geringere Länge als die Montageschale 02 auf, so dass die Montageschale 02 in einem Abstand vom Befestigungsring 07 endet und ein Fenster zwischen den Montageschalen 02 und 03 sowie dem Befestigungsring 07 gebildet wird.

Wird nun das Montagemodul 01 auf den Okulartubus eines Zielfernrohrs bis zum Anschlag der konischen Fläche 11 des Zentrierrings 09 am kragenseitigen Rand des Okulartubus aufgesteckt, erfolgt durch den Eingriff der konischen Fläche in den Rand des Okulars eine selbsttätige Zentrierung bezüglich der optischen Achse des Zielfernrohrs. Beim Anziehen der Klemmschrauben 04 werden die beiden Montageschalen 02 und 03 gegen den Okulartubus geklemmt, so dass eine mechanisch feste Verbindung des Montagemoduls am Okulartubus erfolgt. Da zwischen der Montageschale 03 und dem Befestigungsring 07 im Fenster keine Klemmkräfte übertragen werden, lässt sich eine gegebenenfalls in diesem Bereich kragenseitig am Rand des Okulartubus angeordnete Dioptrienverstellung betätigen ohne die Klemmung lösen zu müssen.

Der Befestigungsring 07 ist an seiner von der Anschlagfläche 08 wegweisenden Seite mit einer Befestigungsvorrichtung zur Befestigung eines Umlenkmoduls in Form eines Bajonettverschlusses versehen. Der Bajonettverschluss weist einen inneren Ring 14 mit vier Verriegelungsausnehmungen 13 auf, die in gleichen Winkelabständen am inneren Ring 14 ausgebildet sind. Das Gehäuse 15 des Umlenkmoduls 12 ist im Bereich seiner ersten Gehäuseöffnung 16 mit einem diese Gehäuseöffnung umlaufenden Absatz 17 versehen, dessen Außendurchmesser geringfügig kleiner als der Innendurchmesser des inneren Rings 14 ist. Am Absatz 17 sind vier Verriegelungswarzen 18 vorgesehen, die in ihrer Anordnung den Vierriegelungsausnehmungen 13 entsprechen. Zum Verbinden des Montagemoduls 01 und des Umlenkmoduls 12 wird das Umlenkmodul 12 mit seinen Verriegelungswarzen 18 in die Verriegelungsausnehmungen 13 gesteckt und verdreht, bis die Verriegelungswarzen 18 hinter den inneren Ring 14 gelangen. Die vom Zielfernrohr weg weisenden Flächen der Verriegelungswarzen 18 können dabei in Umfangsrichtung leicht steigend ausgebildet sein, so dass beim Verdrehen des Umlenkmoduls gegenüber dem Montagemodul 01 eine selbsttätige spielfrei axiale Klemmung erfolgt. Zur Abdichtung der Vorrichtung ist ein Dichtring 19 vorgesehen, der zwischen der Stirnseite des Absatzes 17 und der zugeordneten Fläche des Befestigungsrings 07 verpresst wird.

Am Befestigungsring 07 ist weiter eine Arretiervorrichtung vorgesehen. Diese Arretiervorrichtung besteht aus einem Sicherheitsriegel 20, der vorgespannt durch eine Feder 21 in einer stirnseitig offenen Ausnehmung 22 im Befestigungsring 07 verschieblich gelagert ist. Die Ausnehmung 22 weist eine langlochartige seitliche Öffnung 23 auf. Durch diese Öffnung 23 ist der Sicherheitsriegel 20 über eine Schraube 24 mit einem Betätigungselement 25 in Form eines Schiebers verbunden. Aufgrund der Vorspannung durch die Feder 21 wird der Sicherheitsriegel 20 nach außen gedrückt und gelangt so bei montiertem Zustand des Umlenkmoduls 12 in Eingriff in den Bereich zwischen zwei benachbarten Verriegelungswarzen 18, so dass ein Verdrehen und damit ein unbeabsichtigtes Lösen der Verbindung zwischen dem Montagemodul und dem Umlenkmodul nicht mehr möglich ist. Wird nun zum beabsichtigten Lösen der Verbindung der Sicherheitsriegel 20 das Betätigungselement 25 zum Zurückschieben entgegen der Federkraft vollständig in die Ausnehmung 22 eingefahren, gerät der Sicherheitsriegel aus dem Eingriff mit den Verriegelungswarzen 18, so dass das Umlenkmodul 12 verdrehbar ist und so vom Montagemodul 01 gelöst werden kann.

Der Befestigungsring 07 weist um 180 Grad versetzt eine weitere Ausnehmung auf, die identisch zur Ausnehmung 20 ist. Dadurch kann in einfacher Weise die Arretiervorrichtung um 180 Grad versetzt umgebaut werden.

Das Gehäuse 15 des Umlenkmoduls 12 weist drei Gehäuseöffnungen 16, 26 und 27 auf. Dabei liegen die Gehäuseöffnungen 16 und 26 bezüglich der optischen Achse des Zielfernrohrs hintereinander; die Gehäuseöffnung 27 ist dazu rechtwinklig angeordnet. Im Gehäuse 13 ist eine Umlenkeinrichtung 28 angeordnet. Die Umlenkeinrichtung weist zwei Teilprismen 29 und 30 auf, die entlang ihrer diagonalen Grenzflächen 31 und 32 miteinender verbunden sind. Dabei kann die Verbindung durch Verkleben erfolgen oder durch Adhäsionskräfte aufgrund der polierten aneinanderliegenden Grenzflächen 31 und 32. Dabei wirken die Grenzflächen wie ein halbdurchlässiger Spiegel, so dass sowohl ein durch die Gehäuseöffnung 26 blickender Beobachter das aus dem Okulartubus kommende Bild sehen als auch dieses Bild durch die Grenzflächeneffekte um 90 Grad in Richtung durch die Gehäuseöffnung 27 umgelenkt wird.

Das Gehäuse 33 eines Kameramoduls 34 ist im Bereich der Gehäuseöffnung 27 an das Gehäuse 12 mittels Befestigungsschrauben 35 angeschraubt. Das Gehäuse 33 weist einen Zwischenboden 36 auf, der das Gehäuse 33 in zwei Kammern teilt. In der vom Umlenkmodul 12 wegweisenden Kammer ist eine aus Kunststoff bestehende Trägerplatte 37 angeordnet, die über die Befestigungsschrauben 35, die sowohl die Trägerplatte 37 als auch den Zwischenboden 36 in Ausnehmungen 38 und 39 durchgreifen, mit dem Gehäuse 33 verschraubt ist. Auf der vom Zwischenboden 36 wegweisenden Seite der Trägerplatte 37 ist eine Platine 40 angeordnet, die die wesentlichen elektrischen und elektronischen Bauteile einschließlich des Bildsensors der Kameraeinheit aufweist. Der Bildsensor ist auf der zur Umlenkeinheit 12 weisenden Seite der Platine 40 angeordnet im Bereich einer durchgehenden Ausnehmung in der Trägerplatte 37. In der optischen Achse des Bildsensors ist weiter eine Ausnehmung 41 im Zwischenboden 36 des Gehäuses 33 so angeordnet, dass die optische Achse zwischen Bildsensor, Ausnehmung in der Trägerplatte und Ausnehmung 41 im Zwischenboden die Grenzfläche der beiden Teilprismen 29 und 30 im wesentlichen mittig schneidet.

Um das an der Grenzfläche der Teilprismen erscheinende Bild auf den Bildsensor abzubilden ist eine Linsenanordnung 42 zwischen dem Zwischenboden 36 des Gehäuses 33 und der Prismeneinrichtung vorgesehen. Diese Linsenanordnung weist ein Gehäuse 43 mit einem angeformten Bund 44 auf. Der Zwischenboden 36 weist auf seiner zum Umlenkmodul 12 weisenden Seite eine konzentrisch zur Ausnehmung 41 angeordnete Ausnehmung auf, in die der Bund 44 der Linseneinrichtung 42 so steckbar ist, dass die optischen Achsen der Linseneinrichtung 42 und des Bildsensors fluchten. Die Brennweite der Linseneinrichtung 42 ist so gewählt, dass das auf den Grenzflächen erscheinende Bild im Wesentlichen vollständig und mit ausreichender Schärfe auf den Bildsensor abgebildet wird.

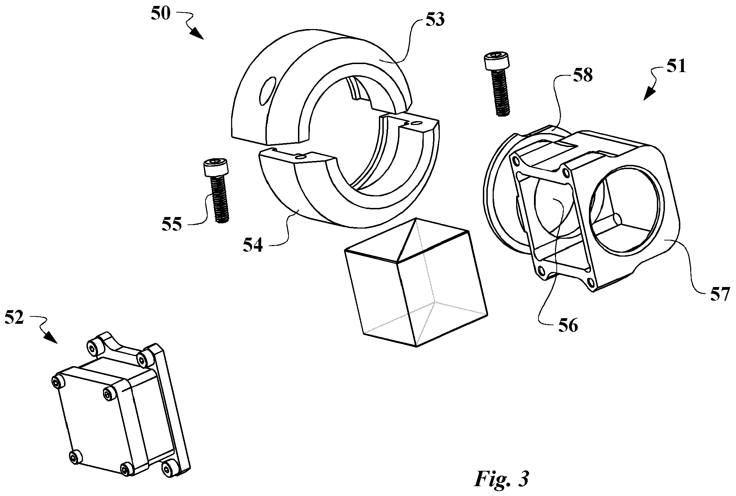

Das in der Fig. 3 gezeigte, nicht erfindungsgemäße Ausführungsbeispiel weist grundsätzlich den gleichen Aufbau mit Montagemodul 50, Umlenkmodul 51 und Kameramodul 52 auf. Kameramodul und Umlenkmodul sind weitgehend identisch zu den entsprechenden Modulen des vorstehenden Ausführungsbeispiels. Im Gegensatz zum vorstehend beschrieben Ausführungsbeispiel weist das Montagemodul 50 jedoch zwei im wesentlichen identische Halbschalen 53 und 54 auf, die über Klemmschrauben 55 unter Einschluss des kragenseitigen Endes des Okulartubus und eines die erste Öffnung 56 des Umlenkgehäuses 57 umlaufenden Kragens 58 gegeneinander klemmbar sind. Der Vorteil dieser Ausführungsform liegt vor allem darin, dass die Kameraeinrichtung in beliebigen Winkeln verschwenkbar am Okulartubus befestigt werden kann.

Das Gehäuse 33 des Kameramoduls 34 wird durch einen Gehäusedeckel 45 verschlossen, der mit Schrauben 46 befestigt wird. Die im Gehäuse angeordnete Stromversorgung sowie die Betätigungselemente sind aus Gründen einer klareren Darstellung nicht gezeigt.

## Patentansprüche

1. Kameraeinrichtung zur Befestigung am Okulartubus einer optischen Einrichtung, insbesondere eines Zielfernrohrs, eines Fernrohrs oder eines Teleskops,
umfassend
- ein Montagemodul (01) zur Befestigung der Kameraeinrichtung am Okulartubus;
- ein Kameramodul (34) zur Aufnahme und/oder Weiterleitung des Bildes,
- ein Umlenkmodul (12) mit einer in einem Gehäuse (15) angeordneten Einrichtung (28) zur Umlenkung des Bildes aus der Achse der optischen Einrichtung zum Kameramodul; wobei die Einrichtung (28) zur Umlenkung halbdurchlässig so ausgebildet und angeordnet ist, dass bei auf die optische Einrichtung aufgesetzter Kameraeinrichtung der Durchblick durch die optische Einrichtung ermöglicht ist,
- wobei das Montagemodul (01), das Umlenkmodul (12) und/oder das Kameramodul (34) lösbar so miteinander verbunden sind, dass das Montagemodul (01) am Okulartubus verbleiben kann, wenn das Umlenk- und Kameramodul (12; 34) von der optischen Einrichtung abgenommen werden,
**dadurch gekennzeichnet,**
**dass** das Montagemodul (01) einen doppelschaligen Aufbau mit zwei Montageschalen (02, 03) aufweist, wobei das Montagemodul (01) im Bereich seines zum Umlenkmodul (12) weisenden Endes einen Befestigungsring (07) mit einer Befestigungseinrichtung zur lösbaren Befestigung des Umlenkmoduls (12) aufweist, und wobei der Befestigungsring (07) einstückig an eine erste der beiden Montageschalen (02, 03) angeformt ist, und wobei die zweite der beiden Montageschalen (03, 02) in einem Abstand vom Befestigungsring (07) endet.

2. Kameraeinrichtung nach Anspruch 1,
**dadurch gekennzeichnet,**
**dass** zwischen den beiden Montageschalen (02, 03) ein im Wesentlichen der Außenkontur des Okulartubus entsprechender Raum gebildet wird, wobei beide Montageschalen (02, 03) mittels einer Klemmeinrichtung (04) den Okulartubus zumindest abschnittsweise kraft- und/oder formschlüssig umschließend gegeneinander klemmbar sind.

3. Kameraeinrichtung nach Anspruch 1 oder 2,
**dadurch gekennzeichnet,**
**dass** der Befestigungsring (07) auf seiner zur optischen Einrichtung weisenden Seite eine vorzugsweise konisch ausgebildete Anschlagfläche (08) zur mittelbaren oder unmittelbaren Anlage des stirnseitigen Endes des Okulartubus aufweist.

4. Kameraeinrichtung nach Anspruch 3,
**dadurch gekennzeichnet,**
**dass** zwischen dem stirnseitigen Ende des Okulartubus und der Anschlagfläche (08) ein Zentrierring (09) angeordnet ist, der (09) zumindest auf seiner zum Okular weisenden Seite zumindest geringfügig konisch ausgebildet ist.

5. Kameraeinrichtung nach einem der Ansprüche 2 **dadurch gekennzeichnet,**
**dass** die Klemmeinrichtung mindestens eine Klemmschraube (04) umfasst, die eine der beiden Montageschalen (03) randseitig in einer Ausnehmung (05) durchgreift und in ein ebenfalls randseitig in der anderen (02) der beiden Montageschalen (02, 03) ausgebildetes Innengwinde (06) eingreift.

6. Kameraeinrichtung nach einem der Ansprüche 3 bis 5,
**dadurch gekennzeichnet,**
**dass** die Befestigungseinrichtung nach Art eines Bajonettverschlusses ausgebildet ist mit mindestens zwei Verriegelungsausnehmungen (13), in die (13) jeweils dazu form- und/oder funktionskomplementäre am Gehäuse (15) des Umlenkmoduls (12) angeordnete Verrieglungswarzen (18) durch eine Steck-Dreh-Bewegung in lösbaren Eingriff bringbar sind.

7. Kameraeinrichtung nach einem der Ansprüche 3 bis 6,
**dadurch gekennzeichnet,**
**dass** eine Arretiervorrichtung am Befestigungsring (07) vorgesehen ist, die ein unbeabsichtigtes Lösen des Umlenkmoduls (12) vom Montagemodul (01) verhindert.

8. Kameraeinrichtung nach einem der Ansprüche 1 bis 7,
**dadurch gekennzeichnet,**
**dass** das Gehäuse (15) des Umlenkmoduls (12) eine erste Gehäuseöffnung (16), eine zweite Gehäuseöffnung (26) und eine dritte Gehäuseöffnung (27) aufweist, wobei die erste Gehäuseöffnung (16) und die zweite Gehäuseöffnung (26) in Richtung der optischen Achse der optischen Einrichtung hintereinander liegen und die dritte Gehäuseöffnung (27) dazu winklig, insbesondere im Wesentlichen rechtwinklig, angeordnet ist, und wobei die Einrichtung (28) zur Bildablenkung so im Gehäuse (15) angeordnet ist, dass das entlang der optischen Achse der optischen Einrichtung durch die erste Gehäuseöffnung (16) eintretende Bild durch die halbdurchlässige Einrichtung (28) zur Bildablenkung über die zweite (26) und die dritte Gehäuseöffnung (27) aus dem Umlenkmodul (12) weitergeleitet wird.

9. Kameraeinrichtung nach einem der Ansprüche 1 bis 8,
**dadurch gekennzeichnet,**
**dass** die Einrichtung (28) zur Bildablenkung einen halbdurchlässigen Spiegel oder eine halbdurchlässige Prismenanordnung (29, 30) aufweist.

10. Kameraeinrichtung nach einem der Ansprüche 1 bis 9,
**gekennzeichnet durch**
eine im Gehäuse (15) des Umlenkmoduls (12) vor oder nach der Einrichtung (28) zur Bildablenkung und/oder im Gehäuse (33) des Kameramoduls (34) angeordnete Linseneinrichtung (42).

11. Kameraeinrichtung nach einem der Ansprüche 1 bis 10,
**dadurch gekennzeichnet,**
**dass** das Kameramodul (34) mindestens einen Bildsensor, insbesondere in Form eines CCD- oder CMOS-Chips, aufweist, der im Gehäuse (33) des Kameramoduls (34) angeordnet ist.

12. Kameraeinrichtung nach einem der Ansprüche 1 bis 11,
**dadurch gekennzeichnet,**
**dass** eine Einrichtung zur Verarbeitung, Speicherung und/oder Weiterleitung der Daten des Bildsensors im Kameramodul (34) vorgesehen ist.

13. Kameraeinrichtung nach Anspruch 11 oder 12,
**dadurch gekennzeichnet,**
**dass** der Bildsensor, die Einrichtung zur Verarbeitung, die Einrichtung zur Speicherung und/oder die Einrichtung zur Weiterleitung der Daten des Bildsensor auf einer Platine (40) angeordnet sind.

14. Kameraeinrichtung nach einem der Ansprüche 1 bis 13,
**dadurch gekennzeichnet,**
**dass** die Montageschalen (02, 03) des Montagemoduls(01), das Gehäuse (15) des Umlenkmoduls (12) und/oder das Gehäuse (33) des Kameramoduls (34) aus Metall, insbesondere aus Aluminium oder einer Aluminiumlegierung, bestehen.

## Claims

1. A camera device for being fastened to an eyepiece tube of an optical device, in particular a telescopic sight, a spyglass or a telescope,
comprising
- an assembly module (01) for fastening the camera device to the eyepiece tube;
- a camera module (34) for recording and/or forwarding the image;
- a deflection module (12) having a device (28) for deflection of the image from the axis of the optical device to the camera module, said device (28) being arranged in a housing (15);
wherein the device (28) for deflection of the image is semi-permeable and is formed and arranged in such a way that viewing through the optical device is enabled when the camera device is arranged on the optical device,
- wherein the assembly module (01), the deflection module (12,) and/or the camera module (34) are detachably connected with each other in such a way that the assembly module (01) is allowed to remain on the eyepiece tube when the deflection module (12) and the camera module (34) are detached from the optical device, **characterised in that**
the assembly module (01) comprises a double-shell structure having two assembly shells (02, 03), wherein, in the area of the end of the assembly module (01) pointing towards the deflection module (12), the assembly module (01) comprises a fastening ring (07) having a fastening device for detachable fastening of the deflection module (12), and wherein the fastening ring (07) is moulded in one piece to a first one of the two assembly shells (02, 03), and wherein the second one of the two assembly shells (03, 02) ends with a spacing from the fastening ring (07).

2. The camera device according to claim 1
**characterised in that**
a space essentially corresponding to the outer contour of the eyepiece tube is formed between the two assembly shells (02, 03), wherein both assembly shells (02, 03) are clampable against each other by means of a clamping device (04), enclosing the eyepiece tube in a force-fitting and/or form-fitting manner at least in sections.

3. The camera device according to claim 1 or 2,
**characterised in that**
the fastening ring (07) comprises a bearing surface (08) being formed preferably conical on its side pointing towards the optical device for direct or indirect bearing of the frontal end of the eyepiece tube.

4. The camera device according to claim 3,
**characterised in that**
a centring ring (09) is arranged between the frontal end of the eyepiece tube and the bearing surface (08), said centring ring (09) being formed at least slightly conical on its side pointing towards the eyepiece.

5. The camera device according to claim 2,
**characterised in that**
the clamping device comprises at least one clamping screw (04) which engages through one of the two assembly shells (03) in a recess (05) arranged at its edge and engages with an inner thread (06) likewise arranged at the edge of the other one (02) of the two assembly shells (02, 03).

6. The camera device according to any one of the claims 3 to 5, **characterised in that**
the fastening device is formed in the type of a bayonet catch having at least two locking recesses (13) with which (13) locking projections (18), each being arranged complementary thereto in form and/or function at the housing (15) of the deflection module (12), are detachably engageable via an insert-and-turn movement.

7. The camera device according to any one of the claims 3 to 6, **characterised in that**
a locking device is provided at the fastening ring (07), said locking device preventing an unintentional detachment of the deflection module (12) from the assembly module (01).

8. The camera device according to any one of the claims 1 to 7, **characterised in that**
the housing (15) of the deflection module (12) has a first housing aperture (16), a second housing aperture (26) and a third housing aperture (27), wherein the first housing aperture (16) and the second housing aperture (26) are aligned behind each other in the direction of the optical axis of the optical device, and the third housing aperture (27) is arranged angularly, in particular essentially at right angles, thereto, and wherein the device (28) for image deflection is arranged in the housing (15) in such a way that the image entering via the first housing aperture (16) along the optical axis of the optical device is forwarded by the semi-permeable device (28) for image deflection via the second housing aperture (26) and the third housing aperture (27) out of the deflection module (12).

9. The camera device according to any one of the claims 1 to 8, **characterised in that**
the device (28) for image deflection comprises a semi-permeable mirror or a semi-permeable prism arrangement (29, 30).

10. The camera device according to any one of the claims 1 to 9, **characterised by**
a lens device (42) arranged in the housing (15) of the deflection module (12) upstream or downstream of the device (28) for image deflection and/or in the housing (33) of the camera module (34).

11. The camera device according to any one of the claims 1 to 10,
**characterised in that**
the camera module (34) comprises at least one image sensor, in particular in the form of a CCD chip or CMOS chip, said image sensor being arranged in the housing (33) of the camera module (34).

12. The camera device according to any one of the claims 1 to 11,
**characterised in that**
a device for processing, storing and/or forwarding the data from the image sensor is provided in the camera module (34).

13. The camera device according to claim 11 or 12, **characterised in that**
the image sensor, the device for processing, the device for storing and/or the device for forwarding the data from the image sensor are arranged on a circuit board (40).

14. The camera device according to any one of the claims 1 to 13,
**characterised in that**
the assembly shells (02, 03) of the assembly module (01), the housing (15) of the deflection module (12) and/or the housing of the camera module (34) consist of metal, in particular of aluminium or of an aluminium alloy.

## Revendications

1. Dispositif de caméra pour être fixé à un tube oculaire d'un dispositif optique, notamment une lunette de visée, une longue-vue ou un télescope,
comprenant
- un module d'assemblage (01) pour fixer le dispositif de caméra au tube oculaire;
- un module de caméra (34) pour enregistrer et/ou transférer l'image,
- un module déviateur (12) ayant un dispositif (28) pour la déviation de l'image à partir de l'axe du dispositif optique vers le module de caméra, ledit dispositif (28) pour la déviation de l'image étant disposé dans un boîtier (15), le dispositif (28) pour la déviation de l'image étant semi-perméable et étant formé et disposé de telle manière que la vue à travers le dispositif optique est possible quand le dispositif de caméra est disposé sur le dispositif optique,
- le module d'assemblage (01), le module déviateur (12) et/ou le module de caméra (34) étant reliés de manière détachable les uns aux autres de telle manière que le module d'assemblage (01) peut rester sur le tube oculaire quand le module déviateur (12) et le module de caméra (34) sont détachés du dispositif optique, **caractérisé en ce que**
le module d'assemblage (01) comprend une structure à double coque ayant deux coques d'assemblage (02, 03), le module d'assemblage (01) comprenant une bague de fixation (07) dans la zone de son extrémité dirigée vers le module déviateur (12), ladite bague de fixation (07) ayant un dispositif de fixation pour la fixation détachable du module déviateur (12), ladite bague de fixation (07) étant moulée en une seule pièce sur une première des deux coques d'assemblage (02, 03), et la deuxième des deux coques d'assemblage (03, 02) se terminant en un écart de la bague de fixation (07).

2. Dispositif de caméra selon la revendication 1
**caractérisé en ce**
**qu'**un espace qui correspond essentiellement au contour extérieur du tube oculaire est formé entre les deux coques d'assemblage (02, 03), les deux coques d'assemblage (02, 03) pouvant être serrées les unes contre les autres moyennant un dispositif de serrage (04), de manière à enserrer le tube oculaire au moins par sections au moyen d'une liaison par friction et/ou par complémentarité de forme.

3. Dispositif de caméra selon la revendication 1 ou 2,
**caractérisé en ce que**
la bague de fixation (07) comprend une surface d'appui (08) étant réalisée préférablement de forme conique sur son côté dirigé vers le dispositif optique pour l'appui direct ou indirect de l'extrémité frontale du tube oculaire.

4. Dispositif de caméra selon la revendication 3,
**caractérisé en ce**
**qu'**une bague de centrage (09) est disposée entre l'extrémité frontale du tube oculaire et la surface d'appui (08), ladite bague de centrage (09) étant réalisée de forme au moins légèrement conique au moins sur son côté dirigé vers l'oculaire.

5. Dispositif de caméra selon la revendication 2,
**caractérisé en ce que**
le dispositif de serrage comprend au moins une vis de serrage (04) qui s'engage à travers l'une des deux coques d'assemblage (03) dans un évidement (05) disposé à son bord et s'engage dans un filetage intérieur (06) également disposé au bord de l'autre (02) des deux coques d'assemblage (02, 03).

6. Dispositif de caméra selon l'une quelconque des revendications 3 à 5,
**caractérisé en ce que**
le dispositif de fixation est réalisé comme une fermeture à baïonnette ayant au moins deux évidements de verrouillage (13) dans lesquels (13) des ergots de verrouillage (18), dont chacun est complémentaire en forme et/ou en fonction et qui sont disposés au boîtier (15) du module déviateur (12), peuvent s'engager de manière détachable par un mouvement insérant et rotatif.

7. Dispositif de caméra selon l'une quelconque des revendications 3 à 6,
**caractérisé en ce**
**qu'**un dispositif de verrouillage est prévu sur la bague de fixation (07), ledit dispositif de verrouillage empêchant que le module déviateur (12) se décolle involontairement du module d'assemblage (01).

8. Dispositif de caméra selon l'une quelconque des revendications 1 à 7,
**caractérisé en ce que**
le boîtier (15) du module déviateur (12) a une première ouverture de boîtier (16), une deuxième ouverture de boîtier (26) et une troisième ouverture de boîtier (27), la première ouverture de boîtier (16) et la deuxième ouverture de boîtier (26) étant alignées l'une après l'autre en sens de l'axe optique du dispositif optique, et la troisième ouverture de boîtier (27) y étant disposée angulairement, notamment à angle essentiellement droit, et le dispositif (28) pour déviation d'image étant disposé dans le boîtier (15) de telle manière que l'image entrant à travers la première ouverture de boîtier (16) le long de l'axe optique du dispositif optique est transférée à partir du module déviateur (12) par le dispositif semi-perméable (28) pour déviation d'image à travers la deuxième ouverture de boîtier (26) et la troisième ouverture de boîtier (27).

9. Dispositif de caméra selon l'une quelconque des revendications 1 à 8,
**caractérisé en ce que**
le dispositif (28) pour déviation d'image comprend un miroir semi-perméable ou un ensemble de prismes (29, 30) semi-perméable.

10. Dispositif de caméra selon l'une quelconque des revendications 1 à 9,
**caractérisé par**
un dispositif de lentille (42) disposé dans le boîtier (15) du module déviateur (12) en amont ou en aval du dispositif (28) pour déviation d'image et/ou dans le boîtier (33) du module de caméra.

11. Dispositif de caméra selon l'une quelconque des revendications 1 à 10,
**caractérisé en ce que**
le module de caméra (34) comprend au moins un capteur d'image, notamment réalisé comme une puce CCD ou une puce CMOS, ledit capteur d'image étant disposé dans le boîtier (33) du module de caméra (34).

12. Dispositif de caméra selon l'une quelconque des revendications 1 à 11,
**caractérisé en ce**
**qu'**un dispositif pour le traitement, le stockage et/ou le transfert des données du capteur d'image est prévu dans le module de caméra (34).

13. Dispositif de caméra selon la revendication 11 ou 12, **caractérisé en ce que**
le capteur d'image, le dispositif pour le traitement, le dispositif pour le stockage et/ou le dispositif pour le transfert des données du capteur d'image sont disposés sur une platine (40).

14. Dispositif de caméra selon l'une quelconque des revendications 1 à 13,
**caractérisé en ce que**
les coques d'assemblage (02, 03) du module d'assemblage (01), le boîtier (15) du module déviateur (12) et/ou le boîtier (33) du module de caméra (34) se composent de métal, notamment d'aluminium ou d'alliage d'aluminium.
